# EUROPEAN PATENT APPLICATION

(11) **EP 2 037 689 A1**
(43) Date of publication of application: **18.03.2009**
(21) Application number: 07743272.2
(22) Date of filing: 14.05.2007
(51) Int. Cl.: H04N 11/04, H04N 5/225, H04N 7/18, H04N 7/26

(54) **METHOD FOR COMPRESSING IMAGING DATA BY USING WIDE-ANGLE LENS, DECOMPRESSED DISPLAY METHOD, COMPRESSION DEVICE, WIDE-ANGLE CAMERA DEVICE, AND MONITOR SYSTEM**

(30) Priority: 29.05.2006 JP 2006147864
(71) Applicant: Opt Corporation, Chino-shi, Nagano 391-0013 (JP)
(72) Inventor: OGAWA, Tatsuro, Chino-shi, Nagano 391-0013 (JP)
(74) Representative: Schäfer, Matthias W.
(86) International application number: PCT/JP2007/059837
(87) International publication number: WO 2007/138846

(57) **Abstract**

The advantage of the invention is to efficiently reduce the amount of image data shot by using a wide -angle lens such as a fish- eye lens. A method of compressing image data shot by a wide -angle lens 9 according to the invention comprises: displacing the image data (step ST 12) in a way so that within a rectangular image containing a circular image shot by the wide-angle lens 9, numbers of colors associated with a plurality of pixel data outside of a predetermined circular region are reduced; and compressing the image data (step ST 14) associated with the rectangular image after the step of displacing is performed on the rectangular image.

## Description

### [Technical Field]

The present invention relates to a method of compressing, a compression device, a wide-angle camera device and a monitoring system for expanding and displaying image data shot by a wide-angle lens,.

### [Technology Background]

The patent document 1 discloses an image transmission system coupling a mobile phone with a camera to a server through a public line. Image data associated with an image shot by a camera is sent from a mobile phone with a camera to a server through a public line. The server clips a part of the image associated with the received image data and sends it to the mobile phone with camera. The mobile phone with camera displays the received clipped image.

The patent document 2 discloses an image transmission system coupling a plurality of mobile phones with camera to a server through a public line. Image data associated with an image shot by one of mobile phones with camera is sent from the mobile phone with camera to a server through a public line. The server clips a part of the image associated with the received image data and sends it to the other mobile phone with camera. Other mobile phones with camera display the received clipped image.

The patent document 3 discloses a computational algorithm which clips an image shot by a fish eye lens as one of wide-angle lens, while suppressing the distortion of a part of the image.

[Patent document 1] Japanese Patent Laid-Open Publication 2003-283819 (Fig.1, Fig.3 and explanation of the preferred embodiments)
[Patent document 2] Japanese Patent Laid-Open Publication 2003-284019 (Fig.1, Fig. 4 and explanation of the preferred embodiments)
[Patent document 3] Japanese Patent Laid-Open Publication 2005-339313 (Abstract, Fig. 4, Fig. 6, Fig. 9 and explanation of the preferred embodiments)

### [Disclosure of the Invention]

### [Problem to Be Solved]

Using technologies disclosed in the patent documents 1 and 2 enables a camera device or a system to clip a part of an image shot by a wide-angle lens such as a fish eye lens as well as suppressing the deformation of the part of the image, transmit the clipped image and display it. Further, using the technology disclosed in the patent document 3 enables a camera device or a system to suppress the deformation of the clipped image.

In recent years, of those imaging devices that generate image brightness distribution data by photo-electric conversion, one that includes a large amount of pixels as many as two million or three million is beginning to be distributed into the market at a cheap price. Further, a device including an ultra large numbers of pixels up to five million is also beginning to be distributed into the market.

Further, the image obtained with a wide -angle lens such as a fish eye lens is converted into an image brightness distribution data by using an imaging device having high number of pixels. This conversion achieves a practical and high resolution image of size such as a Video Graphics Array (VGA) size including 640 x480 pixels or an extended Graphics Array (XGA) size including 1024x768 pixels.

The main use of a device including a wide -angle lens such as a fish eye lens is a monitoring device. Using a monitoring device enables a viewer to browse a shot image in real-time and/or to store it. Further, with a monitoring device, a viewer replays the stored images later.

When the stored image is replayed later, there is a case where a viewer would like to browse a region which is different from the region which was viewed in real-time. Further, a viewer may wish to switch a region to be replayed. However, a monitoring device using a normal lens shoots only a region in which a viewer browses in real-time, but does not shoot out of the region. Hence, it is impossible for a monitoring device using a normal lens to respond to a request mentioned above, which is to switch the region to be browsed when he/she replays later. In contrast to this, a monitoring device using a wide-angle lens such as a fish eye lens shoots outside of the region to be clipped. Consequently, a monitoring device using wide-angle lens is capable of switching an image and replaying it by accumulating and/or transmitting brightness distribution data shot by an imaging device and shot image data based on the brightness distribution data.

Meanwhile, in order to obtain a practical and high resolution clipped image, an imaging device including large numbers of pixels is needed as described above. However, the amount of brightness distribution data generated by an imaging device with a high number of pixels and shot image data based thereon is huge.
Accordingly, the amount of data to be accumulated and transmitted by a monitoring device, which is capable of clipping a part of shot image shoot with wide-angle lends such as a fish eye lends and replaying it, becomes extremely large.

The advantage of the present invention is to provide a method of compressing an image data shot by a wide -angle lens such as a fish lens that is capable of efficiently reducing the amount of image data shot therewith, a method of expanding and displaying the image data shot therewith, a compression device, a wide-angle camera device and a monitoring system.

### [Means to Solve the Problem]

According to the present invention, a method of compressing image data shot by a wide-angle lens comprises: step of displacing the image data in a way so that within a rectangular image containing a circular image shot by the wide-angle lens, the number of colors associated with a plurality of pixel data outside of a predetermined circular region is reduced, and step of compressing the image data associated with the rectangular image after the step of displacing is performed on the rectangular image.

By adopting the method above, since pixel data is compressed after being displaced in such a way so that within a rectangular image containing a circular image shot by the wide-angle lens, the number of colors associated with a plurality of pixel data outside of a predetermined circular region is reduced, the data amount is reduced. Accordingly, the data amount of the shot image after being compressed by the above method is reduced compared to the case in which the number of colors outside of a predetermined circular region of the shot image is not reduced.

Further, in this method, pixel data within a predetermined circular region within the rectangular shot image is not displaced or the like. Thus, it remains as in the original shot image. Accordingly, compared to the case in which the image data associated with the rectangular image shot by the wide-angle lens is encoded as is, the method reduces the data amount after encoding even though the image quality of the circular image after decoding is kept similar to the case in which the image data associated with the rectangular image shot by the wide-angle lens is encoded as is. Namely, the amount of image data shot by using the wide -angle lens can be efficiently reduced.

According to the present invention, a method of expanding the image data shot by a wide -angle lens comprises: step of expanding the image data after it has been displaced in a way so that within a rectangular image containing a circular image shot by the wide-angle lens, the number of colors associated with a plurality of pixel data outside of a predetermined circular region is reduced and step of correcting deformation associated with an expanded image, which has been expanded by the above step, using a parameter related to the deformation of an image of the wide-angle lens, and producing a display image which is a portion of an image associated with the expanded image that has been clipped.

By adopting the method above, it is possible to expand the image data of the image shot by a wide-angle lens such as fish eye lens whose data amount has been efficiently reduced and display a portion of this image after it is corrected appropriately according to the parameter corresponding to the wide-angle lens.

According to the present invention, a method of compressing image data shot by a wide -angle lens comprises: step of displacing the image data in such a way so that within a rectangular image containing a circular image shot by the wide-angle lens, the number of colors associated with a plurality of pixel data outside of a predetermined circular region is reduced, and step of encoding the displaced image data associated with the rectangular image separately into a constant (DC) component and an oscillatory (AC) component by block encoding and/or encoding the displaced image data by run length encoding based on a pixel alignment.

By adopting the method above, the rectangular shot image shot by the wide-angle lens is block -encoded after the pixel data is displaced so that the number of colors associated with a plurality of pixel data outside of a predetermined circular region is reduced. Alternatively, it is encoded by run -length encoding based on a pixel alignment. Accordingly, the data amount of the shot image after being compressed by the above method is reduced compared to the case in which the image is block- encoded or run -length encoded without the number of colors associated with the plurality of pixel data outside of a predetermined circular region being reduced. Furthermore, with this method, the pixel data within the predetermined circular region inside the rectangular shot image remains as in the shot image, and therefore, the image quality is maintained equal to the case of encoding without displacement process. Namely, the amount of image data shot by using the wide -angle lens can be efficiently reduced.

According to the present invention, the another method of compressing image data shot by a wide -angle lens comprises: step of displacing the image data in such a way so that within a rectangular image containing a circular image shot by the wide-angle lens, the number of colors associated with a plurality of pixel data outside of a predetermined circular region is reduced, and step of encoding the image data associated with the displaced rectangular image separately into a constant (DC) component and an oscillatory (AC) component by block encoding, and moreover, at each encoding of the frequency component, at least one of the frequency component of the displaced image data is encoded by run length encoding based on pixel alignment.

By adopting the method above, the rectangular shot image shot by the wide-angle lens is block encoded after the number of colors in the pixels data outside of the predetermined circular region is reduced. Further, at least one frequency component is encoded by the run- length encoding based on pixel alignment. Accordingly, the data amount of the shot image after being compressed by the above method is reduced compared to the case in which the image data is block -encoded or run -length encoded without the number of colors outside of a predetermined circular region being reduced. Furthermore, with this method, the pixel data within the predetermined circular region inside the rectangular shot image remains as in the shot image, and therefore, the image quality is maintained equal to the case of encoding without the displacement process. Namely, the data amount of image shot by using the wide -angle lens can be efficiently reduced.

According to the present invention, the compression device that compresses the image data shot by a wide -angle lens comprises: a displacement means that displaces the image data in a way so that within a rectangular image containing a circular image shot by the wide-angle lens, the number of colors associated with a plurality of pixel data outside of a predetermined circular region is reduced, and a compression means that codes the displaced image data associated with the rectangular image after displaced process separately into a constant component and an oscillatory component by block -encoding and/or encoding the displaced image by run -length encoding based on a pixel alignment.

By adopting the construction above, the rectangular shot image shot by the wide-angle lens is block -encoded after the pixel data is displaced so that the number of colors associated with a plurality of pixel data outside of a predetermined circular region is reduced. Alternatively, it is encoded by run -length encoding based on pixel alignment. Accordingly, the data amount of the shot image after being compressed by the above configuration is reduced compared to the case in which the image data is block -encoded or run -length encoded without the number of colors associated with the plurality of pixel data outside of a predetermined circular region in the shot image being reduced. Furthermore, with this configuration, the pixel data within the predetermined circular region inside the rectangular shot image remains as in the shot image, and therefore, the image quality is maintained equal to the case of encoding without the displacement process. Namely, the amount of image data of the image shot with the wide -angle lens can be efficiently reduced.

According to the present invention, a wide angle camera device comprises :a wide -angle lens, an imaging means that generates an rectangular image including the circular image, which is formed by light concentrated in the wide -angle lens, a shot image production means that displaces the color of an image in a way as to reduce the number of colors in the rectangular image outside of a predetermined circular region, and produces an image whose color within the predetermined circular region is converted and a compression means that separates the shot image into constant component and an oscillatory component by block encoding or codes the shot image by run length encoding based on a pixel alignment.

By adopting the construction above, a plurality of the image data outside of the predetermined circle within the rectangular shot image shot by the wide lens is displaced so that its color numbers are reduced. Further, the shot image is encoded using block -encoding or run -length encoding. Accordingly, the data amount of the shot image after being compressed according to this configuration is reduced compared to the case in which it is block -encoded or run -length encoded without displacing the region outside of a predetermined circular region by a uniform or almost uniform color. Furthermore, with this configuration, the pixel data within the predetermined circular region inside the rectangular shot image remains as in the shot image after being color transformed, and therefore, the image quality is maintained equal to the case of encoding without the displacement process. Namely, the data amount of image shot by the wide -angle lens can be efficiently reduced.

In addition to the present invention, the wide- angle camera device comprises: an imaging means that has at least three million pixels, a saving means that saves the image data compressed by the compression means, an expanding means that expands the compressed image saved by the saving means, and a display image production means that clips a part of the image expanded by the expanding means and expands the clipped part to at least the VGA size for producing a clipped image.

By adopting the construction above, the amount of image data shot using the wide -angle lens can be efficiently reduced and the storage capacity of the saving means can also be reduced. Further, the compressed image data saved by the saving means can be expanded after the image is shot, a desired part of the image can be clipped so as to generate an enlarged display image which is equal to or larger than the size of VGA ,with practical high resolution.

According to the present invention, a monitoring system comprises a wide angle camera device and a browsing means. The wide angle camera device comprises a wide -angle lens, an imaging means that forms a circular image based on light focused by the wide-angle lens, produces a rectangular image containing the circular image, and includes at least 3 million pixels, a shot image production means that displaces the color of an image in such a way as to reduce the number of colors in the rectangular image outside of a predetermined circular region, and produces an image whose color within the predetermined circular region is converted, a compression means that separates the shot image into constant component and an oscillatory component by block -encoding or encodes the shot image by run -length encoding based on a pixel alignment, a saving means that saves the image data compressed by the compression means, an expanding means that expands the compressed image saved by the saving means, and a display image production means that clips a part of the image expanded by the expanding means and enlarges the clipped part to at least the VGA size for producing a clipped image. Moreover, the browsing means includes a displaying means that receives the enlarged clipped image or the clipped image before being enlarged through transmission from the wide angle camera device and displays the received display image.

By adopting the construction above, a desired part of the image shot by the wide angle camera device can be clipped to obtain an enlarged clipped image whose size is equal to or larger than VGA size, with practical high resolution.

According to the present invention, a monitoring system comprises: a wide -angle lens, a wide -angle camera device that produces a rectangular shot image containing a circular image shot by the wide -angle lens, and a browsing means that includes a display means displaying the rectangular shot image generated by the wide -angle lens camera device or a part of the rectangular shot image. Other monitor system as the other aspect of the invention comprises: a displacement means that displaces the image data in a way so that within a rectangular image containing a circular image shot by the wide-angle lens, the number of colors associated with a plurality of pixel data outside of a predetermined circular region is reduced, a compression means that separates the image data that has been displaced by the displacement means into constant component and an oscillatory component by block -encoding or codes the image data by run -length encoding based on a pixel alignment, a transmission means that transmits the image compressed by a compressing means and/or saved by a saving means from the wide -angle lens camera device to the browsing means, an expanding means that expands the image compressed image saved by the memory or the compressed image transmitted by the transmitting means, and a display image production means that clips a part of the image expanded, enlarged or reduce by the expanding means and enlarges the clipped part for generating an image to be displayed by a displaying means.

By adopting the construction above, the image saved in the saving mean or transmitted by the transmission mean results in a rectangular shot image shot by the wide-angle lens which is block encoded or run length encoded after being displaced so that the number of colors associated with a plurality of pixel data outside of a predetermined circular region is reduced.
Accordingly, the data amount of the image saved by the saving mean or transmitted by the transmission mean is reduced compared to the case in which it is block -encoded or run - length encoded without displacing the region outside of a predetermined circular region by a uniform color. Furthermore, with this configuration, the pixel data within the predetermined circular region inside the rectangular shot image remains as in the shot image, and therefore, the image quality is maintained almost equal to the case of encoding without the displacement process. Namely, the amount of image data shot by the wide -angle lens can be efficiently reduced, and the data amount of the image saved by the saving mean or transmitted by the transmission mean can be efficiently reduced.

In addition to the configuration of the invention above, in the another monitor system, the compressing means may augment the image data produced as the result of compression with a parameter related to the distortion of the image formed by the wide-angle lens, and the display image production means may correct the deformation of the image expanded by the expanding means using the parameter added to the compressed version of the image.

By adopting the construction above, the display image production mean is able to produce a display image from which deformation is removed preferably even if a kind of wide-angle lens changes by correcting the distortion according to the wide-angle lens.

According to the present invention, a monitoring system comprises: a saving unit that saves an image data that has been compressed after being displaced in a way so that within a rectangular image containing a circular image shot by the wide-angle lens, the number of colors associated with a plurality of pixel data outside of a predetermined circular region is reduced, and a parameter related to the distortion of the image shot by the wide-angle lens; a transmission unit that transmits the image data stored by the saving unit and the parameter; an expanding unit that expands the compressed image transmitted by the transmission unit; a display image production unit corrects the deformation of the image expanded by the expanding unit using the parameter transmitted by the transmission unit and produces a display image that is clipped from a part of the corrected image; and a display unit that displays the display image produce by the display image production unit.

By adopting the construction above, the rectangular image containing a circular image shot by the wide-angle lens can be compressed efficiently and saved. Thereafter, the deformation can be corrected properly using the parameter related to the distortion of the image shot by the wide-angle lens. Then, the part of the image clipped from the image after deformation correction can be displayed.

According to the present invention, a monitoring system comprises: a saving unit that stores an image data that has been compressed after being displaced in a way so that within a rectangular image containing a circular image shot by the wide-angle lens, the number of colors associated with a plurality of pixel data outside of a predetermined circular region is reduced, and a parameter related to the distortion of the image shot by the wide-angle lens; an expanding unit that expands the image associated with the image data saved by the saving unit; a transmission unit that transmits data associated with a part of an image clipped from the image generated by the expanding unit, and the parameter, a display image production unit that corrects the deformation of the part of the image data transmitted by the transmission unit using the parameter and produces a display image; and a display unit that displays the display image produced by the display image production unit.

By adopting the construction above, the rectangular image containing a circular image shot by the wide-angle lens can be compressed efficiently and saved. Thereafter, the deformation can be corrected properly using the parameter related to the distortion of the image shot by the wide-angle lens. Then, the part of the image clipped from the image after the deformation correction can be displayed.

### [Advantage of the Invention]

According to the present invention, the data amount of image shot by using a wide -angle lens such as a fish- eye lens can be efficiently reduced.

### [Brief Description of Drawings]

[Fig1.] Fig.1 is an oblique perspective view showing an ultra -small and wide -angle camera device for a first embodiment of the invention.
[Fig.2] Fig.2 is a block diagram showing a shooting function embedded in the ultra- small and wide -angle camera device in Fig.1.
[Fig.3] Fig.3 is a diagram illustrating the optics of the ultra- small and wide -angle camera device.
[Fig.4] Fig.4 is an illustrative diagram showing an example of an image formed on the light receiving surface of a CMOS imaging device.
[Fig.5] Fig.5 is a block diagram showing a hardware structure of ASIC in Fig.2.
[Fig.6] Fig.6 is a flow chart showing the operation of shooting an image with the ultra- small and wide -angle camera device in Fig.2.
[Fig.7] Fig.7 is a flow chart showing the operation of replaying an image with the monitor system in Fig.2.
[Fig.8] Fig.8 is an illustrative diagram showing examples of display instruction commands produced by the PC displaying controller in Fig.2 based on the input data.
[Figs.9] Figs.9 are diagrams showing examples of display combinations displayed by a large sized LCD of the personal computer in Fig.2.
[Fig.10] Fig.10 is a flow chart showing flow of the operation for generating a still image to be displayed by the ultra- small and wide -angle camera device.

### [Reference Numerals]

1: ultra -small and wide -angle camera device (wide- angle camera device)
9: fish eye lens (wide angle lens),
11: USB cable (a part of transmission mean)
12: personal computer ( browsing device)
13: monitoring system
21: CMOS imaging device (imaging mean)
26: HDD (saving mean)
31: color conversion unit (displacement mean, shot image production mean)
32: display image production unit (display image production mean)
35: JPEG engine (compressing mean and expanding mean)
37: device communication unit (a part of transmission mean)
43: LCD (displaying mean)
46: host communication unit (a part of transmission mean)

### [The preferred embodiments of the invention]

Exemplarily embodiments of a method of compressing image data shot by wide-angle lens, an expanding and displaying method, a compression device, a wide-angle camera device and a monitoring system associated with the invention will be explained by referring to figures. The wide-angle camera device will be explained as an example of ultra- small and wide angle camera device that is a part of monitoring system. The compression device will be explained as a part of the ultra- small and wide -angle camera device. The compressing method and the expanding method will be explained as a part of the operation of the ultra- small and wide -angle camera device.

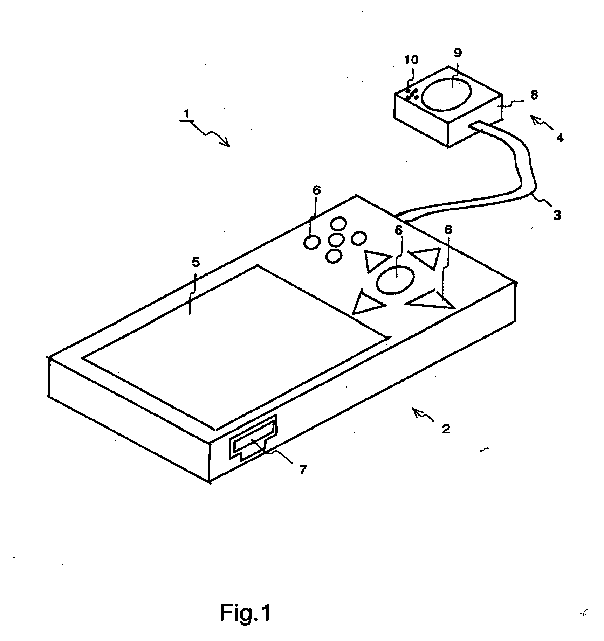

Fig.1 is an oblique perspective view showing a ultra -small and wide -angle camera device 1 regarding a first embodiment of the invention.

The ultra- small and wide -angle camera device 1 comprises a body unit 2 and a camera unit 4 coupled with body unit 2 through a signal wire 3. A person can put it into pocket and casually carry it. Here, the camera unit 4 may be coupled to the body unit 2 by wireless communication through a wireless transmission route, or embedded in the body unit 2 as a part of it.

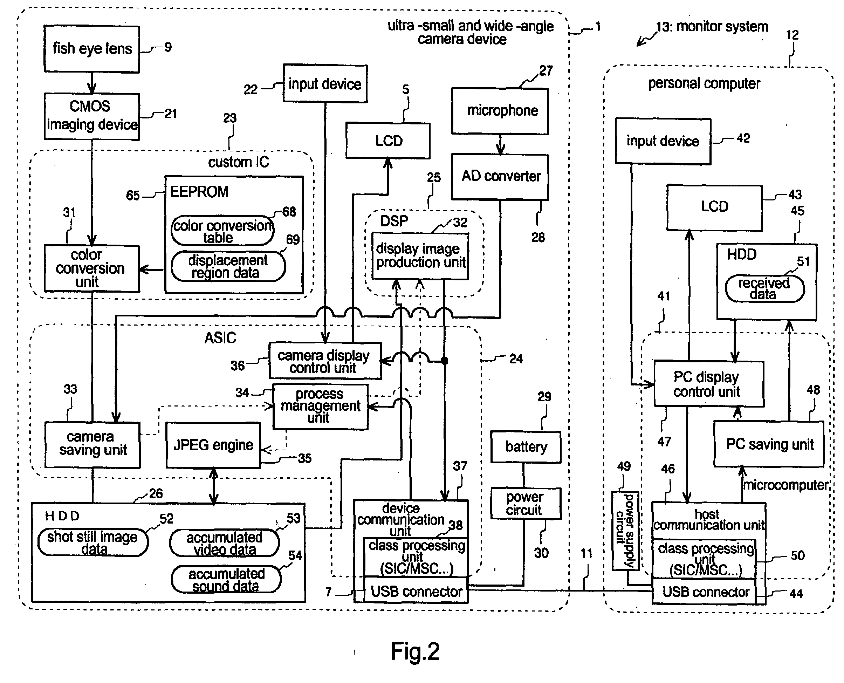

The body unit 2 has a board shape which is approximately rectangular and is almost the same size as a portable music player. The portable music player uses a hard disk drive (HDD) or a semi conductor memory which records content data. The body unit 2 is provided with a liquid crystal device (LCD) 5, a plurality of operational keys 6 in an input device 22 (refer to Fig.2) and a universal serial connector (USB) connector 7, which are installed as exposed. The LCD 5 and the plurality of operational keys 6 are installed as arranged together on the upper surface of the body unit 2 in Fig.1, which is an upper side of Fig.1. Further, the USB connector 7 is installed on the side of the body which is a lower right side of Fig.1. A USB cable can be coupled to the USB connector 7. The USB cable includes a wire for a power source and a wire for signal transmission. As the USB connector 7, a mini B type may be favorable for its compact size, for example.

The camera unit 4 includes a housing 8 which has an approximate cubic shape for example. The camera unit 4 is provided with a fish lens 9 as a wide angle lens which is installed as being exposed on the upper surface of it, the upper side of Fig.1. A ventilation hole 10 for a microphone 27 is formed at a place adjacent to the exposed position of the fish eye lens 9. The fish eye lens 9 has a shape containing less amount of protrusion compared to a normal fish eye lens, and contains a planar surface opposing an object to be imaged.

Fig.2 is a block diagram showing a shooting function embedded in the ultra-small and wide -angle camera device 1 in Fig.1. Fig.2 illustrates not only the ultra- small and wide -angle camera device 1, but a personal computer 12 as a browsing device, which is coupled to the ultra- small and wide -angle camera device 1 through the USB cable 11. A monitoring system 13 comprises the ultra -small and wide -angle camera device 1 and the personal computer 12.

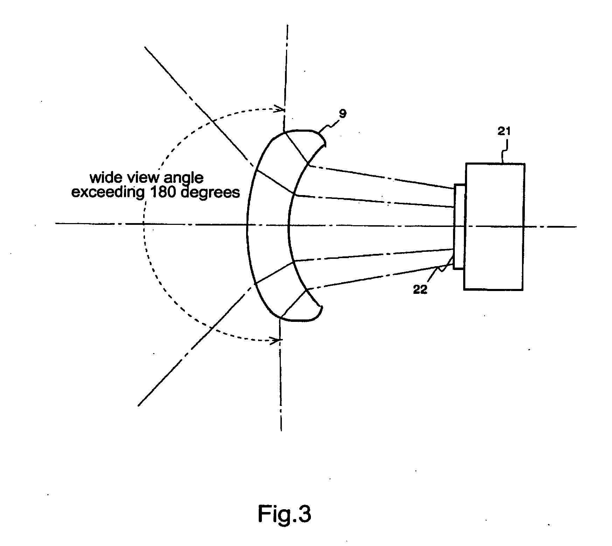

The ultra- small and wide -angle camera device 1 includes a complementary metal oxide semiconductor (CMOS) imaging device 21_as an imaging unit. Fig.3 is a diagram illustrating the optics of the ultra- small and wide -angle camera device 1. The CMOS imaging device 21 includes a light receiving surface 22 of which the aspect ratio is 4:3 (horizontal: longitudinal.) Here, the aspect ratio as horizontal and longitudinal directions of the light receiving surface 22 may be 16:9 or the like. A plurality of light receiving elements not shown in the figure are arranged horizontally and longitudinally and installed on the light receiving surface 22 of the CMOS imaging device 21. A plurality of light receiving elements up to three million pixels for example are installed on the light receiving surface 22 for example.

As shown in Fig.3, the fish lens 9 is installed toward the approximately vertical direction against the light receiving surface 22 in the CMOS imaging device 21. The fish lens 9 has a wide viewing angle which is 180 degrees or more (approximately 200 degrees.) An image due to concentrating light from the subject with the fish lens 9 is formed on the light receiving surface 22 of the CMOS imaging device 21.

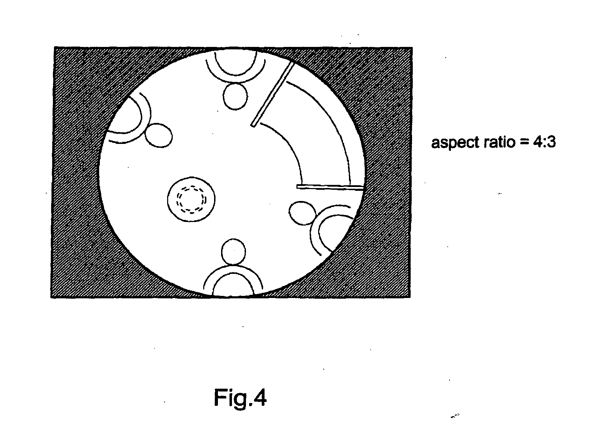

Fig.4 is an illustrative diagram showing an example of an image formed on the light receiving surface 22 of the CMOS imaging device 21. As shown in Fig.4, a light concentrated by the fish lens 9 is projected to the center of the light receiving surface 22. A circular image with a circular outline is formed by this light at the center of the light receiving surface 22. A circular image is an image of the object that passes through the fish eye lens 9. Here, in the circumferential area outside of the circular image on the light receiving surface 22 (a part marked by oblique lines in Fig.4), a small graded effect is given to that area due to light leaking from the camera unit 4 or light that runs around by diffraction. The amount of light received in the circumferential area does not become a uniform black value.

The CMOS imaging device 21 reads the amount of light irradiated onto a plurality of light receiving elements arranged on the light receiving surface 22 and generates a brightness distribution data of the rectangular image which has the same aspect ratio as the light receiving surface 22. The brightness distribution of the rectangular image contains brightness distribution data associated with the circular image in its center.

Here, a charge coupled device (CCD) may be used instead of the CMOS imaging device 21. In the CMOS imaging device 21, the amount of light irradiated onto a plurality of light receiving elements which are arranged in a line on the light receiving surface 22 can be read every line. On the other hand, In a CCD, the amount of light can be read per each light receiving element. This reading with CCD takes more time for generating one brightness distribution data, compared to that of the CMOS imaging device 21.

The ultra- small and wide -angle camera device 1 comprises the LCD 5, the input device 22 having a plurality of operating keys 6, the USB connector 7, the fish eye lens 9, the CMOS imaging device 21, a custom integrated circuit (IC) 23, an application specific IC (ASIC) 24, a digital signal processor (DSP) 25, HDD26 as a saving mean for memorizing data, the microphone 27, an AD converter 28, a battery 29 and a power source 30. Of these components in the circuit configuration, for example, the fish eye lens 9, the CMOS imaging device 21, a custom integrated circuit (IC) 23, and the microphone 27 may be installed into the camera unit 4 and other components in the circuit configuration may be installed into the body unit 2.

The microphone 27 picks up sounds around the ultra -small and wide -angle camera device 1. The microphone 27 generates a sound signal such as a voice. The waveform of the sound signal changes depending on the sound picked up by the microphone 27. The AD converter 28 samples the sound signal and produces sound data such as a voice.

The battery 29 charges electric power. The power source circuit 30 supplies the electric power from the battery 29 or the wire for a power source in the USB cable 11 to each constituents of the ultra -small and wide -angle camera device 1 by DC voltage.

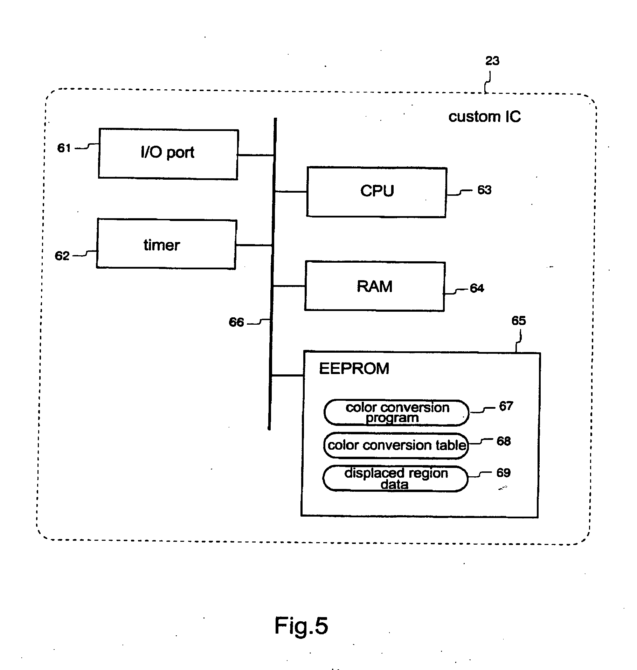

Fig.5 is a block diagram showing a hardware structure of the custom IC 23 in Fig.2. The custom IC 23 is one kind of microcomputer and comprises an input and output (I/O) port 61, a timer 62, a central processing unit (CPU) 63, a random access memory (RAM)64, an electrically erasable and programmable read only memory (EEPROM) 65 and a system bus 66 coupling these components.

The I/O port 61 of the custom IC 23 is coupled to the CMOS imaging device 21, the ASIC 24 or the like. The I/O port 61 supplies data received from the system bus 66 to the CMOS imaging device 21 and the ASIC 24 and also supplies data received from the CMOS imaging device 21, the ASIC 24 or the like to the CPU 63 through the system bus 66.

The timer 62 measures time. Time measured by the timer 62 includes absolute time such as time of the day and a time elapsed since a predetermined time.

The EEPROM 65 stores data. The data memorized by EEPROM 65 of the custom IC 23 includes such as a color conversion processing program 67, and data used during the color conversion for example. The data used during the color conversion includes such as a color conversion table 68 and displaced region data 69 for example.

The color conversion table 68 includes data used for producing the shot still image data 52 from the brightness distribution data generated by the CMOS imaging device 21. In the color conversion table 68, a value for an amount of light received is corresponded with a value of a color for example.

The displaced region data 69 is data indicating a region to which the color conversion is performed using the color conversion table 68. The displaced region data 69 is saved as a region in which the image data within the region bounded by the circular image in Fig.4 is color- converted using a color conversion table 68 for example. The displaced region data 69 may also be saved as a region in which the image data outside the region bounded by the circular image in Fig.4 is not color- converted using a color conversion table 68.

CPU 63 reads color conversion program 67 saved by EEPROM 65 into RAM 67 and executes the program. By this execution, as ,shown in Fig.2, Custum IC 23 realizes a color conversion processing unit 31 in the form of the displacement means and the shot image production means.

The color conversion processing unit 31 produces the shot still image data 52 from the brightness distribution data. The color conversion processing unit 31 produces the shot still image data 52 based on the color conversion table 68 and/or the displaced region table 69 stored in EEPROM 65.

The DSP 25 is one kind of microcomputer and comprises an I/O port not shown in the figure, a timer, CPU, RAM, EEPROM, and a system bus coupling these components. The I/O port of the DSP 25 is coupled to ASIC 24 or the like. CPU in the DSP 25 reads the display image generation program not shown in the figure stored in EEPROM into RAM and executes the program. This execution realizes a display image production unit 32 in the DSP 25 as shown in Fig.2.

The still image data is supplied to the display image production unit 32 from the ASIC 24. The display image production unit 32 produces display still image data to be displayed on a predetermined display device from the supplied still image data. The display image production unit 32 produces display still image data having a predetermined resolution of a display device from the supplied still image data including various numbers of pixels for example. The display image production unit 32 may produce displayed still image data to be displayed on a part of a predetermined display device from the supplied still image data including various numbers of pixels for example.

The ASIC 24 is one kind of microcomputer and comprises an I/O port not shown in the figure, a timer, CPU, RAM, EEPROM, and a system bus coupling these components. The I/O port of the ASIC 24 is coupled to the custom IC 23, the DSP 25, the input device 22, the LCD 5, the AD converter 28, the HDD 26 and the USB connector 7. CPU in the ASIC 24 reads the camera control program (not shown in the figure) stored in EEPROM into RAM, and executes the program. This execution realizes a camera file saving unit 33, a processing management unit 34, a joint photographic experts group (JPEG) engine 35 as a compressing means and an expanding means, a camera display control unit 36, and device communication unit 37 as show in Fig.2 in the ASIC 24.

The camera file saving unit 33 stores the shot still image data 52 supplied from the custom IC 23 to the ASIC 24, into the HDD 26.

The JPEG engine 35 compresses the shot still image data 52 using JPEG method. According to the JPEG method, first, discrete-cosine transformation (DCT) and quantization are applied to an image to be compressed per block unit of a predetermined pixel size (8x8 pixels for example), so that a spatial frequency component is obtained per block unit of the image. The spatial frequency component per block unit of an image comprises a constant component per block unit and a plurality of oscillatory components per block unit. Next, in the JPEG method, an entropy encoding is applied to the image per each frequency components so as to reduce the volume of image data. In the entropy encoding, the constant component of an image is encoded by a predictive encoding such as Huffman encoding and the oscillatory component of an image is encoded by run- length encoding such as arithmetic encoding.

The JPEG engine 35 can expand data by executing the above compression processing in reverse sequence. The JPEG engine 35 can obtain the shot still image 52 or a shot still image data of approximately the same quality of the image as the shot still image 52 from the image data (the compressed still image data) compressed with the JPEG method by executing reverse sequence of the above compression processing.

The camera display control unit 36 supplies the display still image data produced by the display image production unit 32 to the LCD 5. Accordingly, the LCD 5 displays an image based on the display still image data.

The device communication unit 37 executes data communication based on the USB standard by using the USB connector 7. The device communication unit 37 executes data transmission and reception with the host communication unit (the host communication unit 46 in the personal computer 12 as shown in Fig.2.) The device communication unit 37 includes a class processing unit 38 such as a still image class (SIC) and a mass storage class (MSC.) The class processing unit 38 includes various communication buffers such as end points that correspond to classes. If communication data is recorded onto the communication buffer by the device communication unit 37, the class processing unit 38 transmits the communication data to the host communication unit 46. Further, if the class processing unit 38 receives communication data from the host communication unit 46, it stores the received communication data to the communication buffer and informs the device communication unit 37 of it.

The process management unit 34 manages the operation of the ultra -small and wide-angle camera device 1. More specifically, the process management unit 34 , for example, manages the camera file saving unit 33, the JPEG engine 35, the device communication unit 37, or the like, which are realized by the ASIC 24 , and it also manages the executions of the camera display control unit 36 realized by the ASIC 24 and that of the display image production unit 32 realized by the DSP 25.

The personal computer 12 constituting the monitor system 13 in Fig.2 includes the microcomputer 41. The micro computer 41 comprises an I/O port (not shown), CPU, timer, RAM and a system bus coupling these components. The I/O port of the microcomputer 41 is coupled to an input device 42 such as a keyboard or a pointing device, a large size LCD 43 as a displaying means, a USB connector 44 and HDD 45 or the like. CPU in the microcomputer 41 reads the client program (not shown) stored in HDD 45 into RAM and executes the program. This execution realizes the host communication unit 46, a PC display controlling unit 47 and a PC saving process unit 48 in the microcomputer 41_as shown in Fig.2. Further, a wiring in the USB connector 44 for a power source is coupled to the power supplying circuit 49.

The host communication unit 46 transmits and/or receives communication data with the device communication unit 37 through the USB connector 44. The host communication unit 46 includes a class processing unit 50 such as SIC and MSC.

The PC saving process unit 48 saves various communication data such as display still image data received by the host communication unit 46 to the HDD 45 in the personal computer 12 as received data 51.

The PC display controlling unit 47 supplies the display still image data saved in the HDD 45 of the personal computer 12 to the large size LCD 43. This supplying cause the LCD 43 of the personal computer 12 to display an image based on the display still image data.

Here, various programs and data saved in memory device such as EEPROM 65 embedded in the custom IC 23 of the ultra -small and wide -angle camera device 1, EEPROM embedded in the DSP 25, EEPROM embedded in the custom ASIC24 and a HDD 45 in the personal computer 12 may be stored in these memory devices before shipping or installed and stored in these memory devices after shipping. Programs and data installed in these memory devices after shipping may be stored in a recording medium such as CD-ROM (not shown) or obtained through the communication medium such as Internet (not shown).

Further, a part of various programs and data may be installed after shipping. The client program saved in the HDD 45 of the personal computer 12 may be saved such as a combination of an operating system program with an application program. Further, the client program may be saved as a combination of an operating system program, a browsing program with a plug-in program executing as a part of the browsing program. Further, these browsing program and plug- in program may be installed after shipping the personal computer 12.

Next, the operation of the monitoring system 13 having the above configuration will be explained.

The fish eye lens 9 of the ultra -small and wide -angle camera device 1 concentrates light from the subject by a wide view angle of 180 degree or more. The CMOS imaging device 21 receives subject light concentrated by the fish eye lens 9 on the light receiving surface 22 and generates brightness distribution data of an image focused on the light receiving surface 22. When the image is formed on the light receiving surface 22 in Fig.4, the CMOS imaging device 21 generates the brightness distribution data of the rectangular image containing the circular image focused in the center of the light receiving surface 22. In the circumferential area which is out of the region of the circular image on the brightness image data, there is a slightly illuminated part due to light leaked from the camera unit 4 or light rounded by diffraction. Namely, shading occurs in the circumferential area which is outside the range of the circular image.

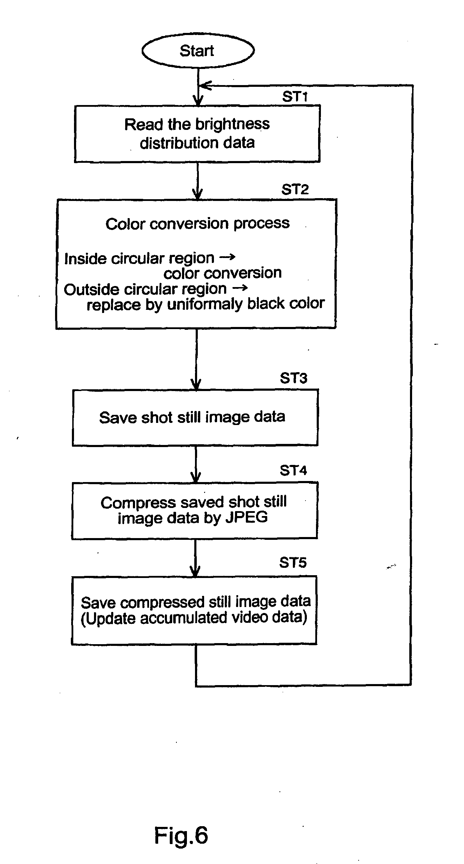

Fig.6 is a flow chart showing the shooting operation with the ultra- small and wide -angle camera device 1 in Fig.2.

When the CMOS imaging device 21 generates the brightness distribution data, the color conversion processing unit 31 of the custom IC 23 reads the brightness distribution data (step ST1) and begins to perform color conversion for producing the shot still image data 52(step ST2.)

During color conversion, more specifically, for example, first, the color conversion processing unit 31 reads displaced region data 69 from EEPROM 65 (not shown) and separates the data into a part of the image of brightness distribution data generated by the CMOS imaging device 21 within the circular region from the part outside the circular region.

Next, with respect to pixels within the image of the circular region of the brightness distribution data, the color conversion processing unit 31 reads a color value corresponding to the amount of light received by elements from the color conversion table 68 stored in the EEPROM 65 and assigns the read value to the pixel. The color conversion processing unit 31 assigns a predetermined color (black for example) to associated pixels outside of the circular region of the brightness distribution data.

Accordingly, the color conversion processing unit 31 produces the shot still image data 52. The data 52 comprises a predetermined color distribution based on the brightness distribution for the image inside a circular region, and a predetermined uniform color (uniformly black for example) for the image outside of the circular region determined by the displaced region data 69.

The color conversion processing unit 31 supplies the produced shot still image data 52 to the camera file saving unit 33 in the ASIC 24. The camera file saving unit 33 saves the supplied shot still image data 52 to the HDD 26 in the ultra -small and wide -angle camera device 1 (step ST3.) This saving causes the HDD 26 in the ultra -small and wide -angle camera device 1 to store the shot still image data 52 containing the shot update image.

The camera file saving unit 33 saves the updated shot still image data 52 to the HDD 26 and informs the process management unit 34 of it. If the process management unit 34 receives the report of the saving from the camera saving unit 33, it instructs the JPEG engine 35 to perform compression.

Receiving a compression processing instruction from the process management unit 34, in other words, when the compression processing instruction is given by saving the updated shot still image data 52 to the HDD 26, the JPEG engine 35 reads the shot still image data 52 stored in HDD 26, and begins compression of the shot still image data 52 (Step ST4.)

Specifically, in compression, the JPEG engine 35 reads the shot still image data 52 stored in HDD 26 block by block, and performs DCT processing and run -length encoding every block. Accordingly, the still image data compressed by the JPEG method from the shot still image data 52 is produced.

The JPEG engine 35 adds time information measured by the timer to the produced and compressed still image and then stores the data onto the HDD 26 of the ultra -small and wide -angle camera device 1 (step ST 5.) Namely, the compressed still image data formed by compressing the updated shot still image data 52 is saved in HDD 26 of the ultra -small and wide -angle camera device 1. Moreover, the JPEG engine 35 supplies the compressed still image data to The display image production unit 32 of DSP 25.

The CMOS imaging device 21 generates the brightness distribution data at a predetermined imaging cycles. The ultra -small and wide -angle camera device 1 performs imaging operation shown in Fig.6 every time the brightness distribution data is generated. Accordingly, the HDD 26 of the ultra -small and wide -angle camera device 1 accumulates the compressed still image data based on the brightness distribution data generated by the CMOS imaging device 21. The accumulated video data 53 comprising a plurality of compressed still image data is produced in the HDD 26 of the ultra -small and wide -angle camera device 1. The accumulated video data 53 in HDD 26 is updated every time the JPEG engine 35 produces a new compressed still image data and it is added.

Alternatively, the accumulated video data 53 produced within HDD 26 may be other data such as a video data based on the moving picture experts group (MPEG) method. Video data based on MPEG may be produced by the MPEG engine (not shown), for example, in such a way that after accumulating a plurality of shot still image data 52 to HDD 26.

While the video recording of the video based on Fig. 6 is executed in the ultra -small and wide -angle camera device 1 as above, the input device 42 of the personal computer 12 produces input data based upon user's key operation.

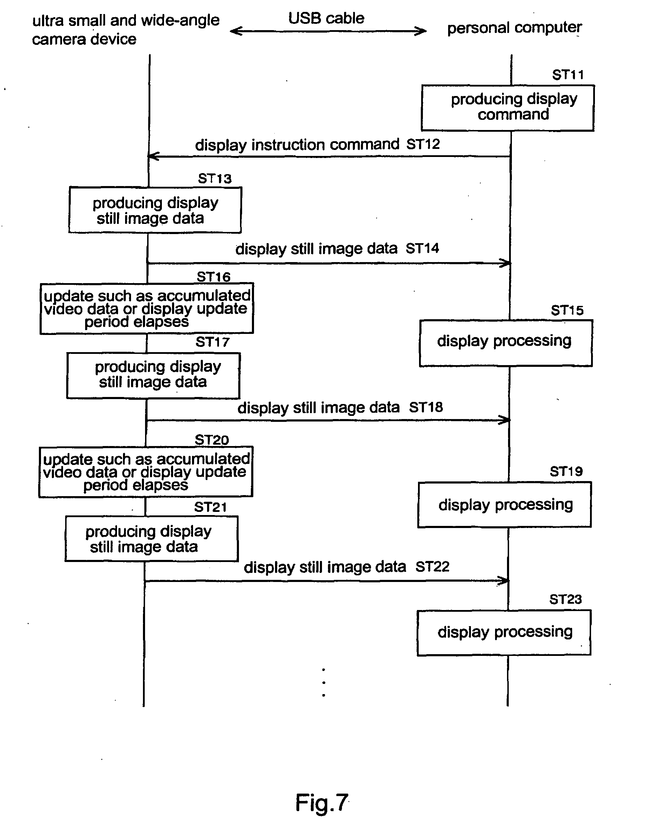

Fig.7 is a flow chart showing the operation of replaying by the monitor system 13 in Fig.2. The input device 42 of the personal computer 12 supplies the produced input data to the PC display controlling unit 47 of the microcomputer 41. The PC display controlling unit 47 produces display instruction commands based on input data (step ST11.)

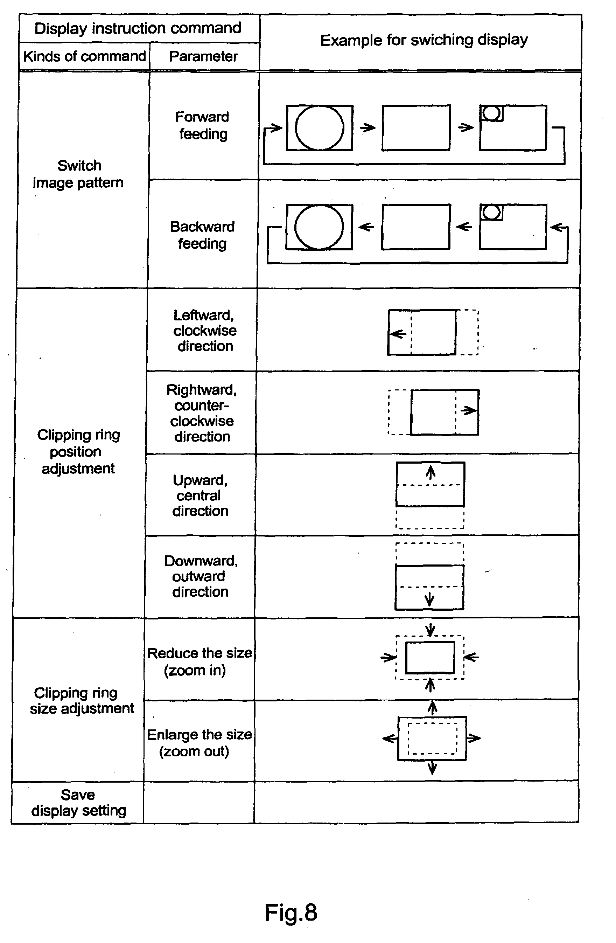

Fig.8 is an illustrative diagram showing examples of display instruction commands produced by the PC display controlling unit 47 in Fig.2 based on the input data. The PC display controlling unit 47 produces two kinds of image pattern switching commands, four kinds of clipping-ring positioning commands, clipping ring size adjusting commands, and a display setting saving command, as shown in Fig.8. The PC display controlling unit 47 further produces a display starting instruction command, a time designation command, a display ending instruction command and the like other than commands shown in Fig.8.

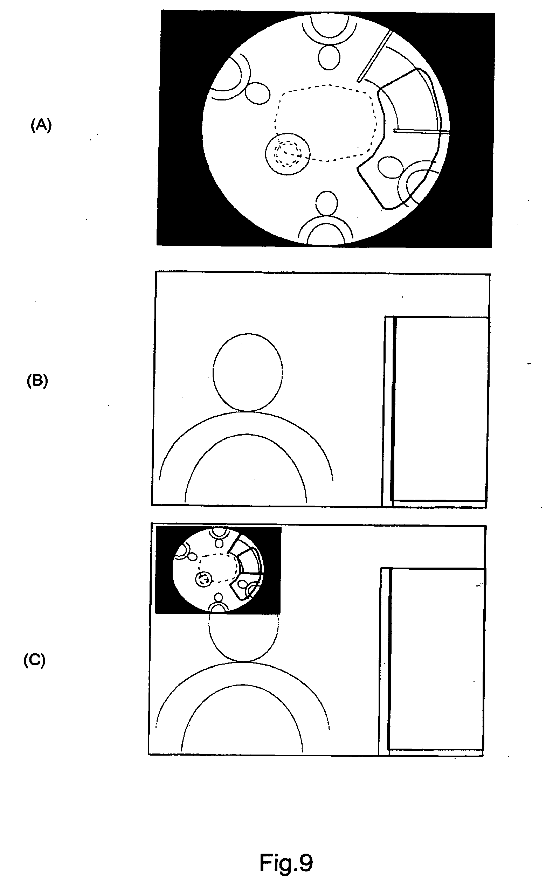

Figs.9 is a diagram showing exemplary combination of display screen displayed onto the large size LCD 43 of the personal computer 12 in Fig.2. Fig.9(A) is an example of a wide-angle screen shot by the ultra -small and wide -angle camera device 1. Fig.9(B) is an example of a clipped screen, which is obtained by clipping out the region bounded by the solid line in Fig.9(A). The solid line boundary in Fig.9(A) is called a clipping ring hereafter. Fig.9(C) is an example of double screen to which the reduced wide-angle image is assigned on the upper-left corner of the clipped image, which is the same clipped image as shown in Fig.9(B).

Of the display instruction commands produced by the PC display controlling unit 47 based on the input data, the display starting instruction command is to instruct the initiation of a displaying of the wide angle screen shown as Fig.9 (A). The time designation command is to designate time for initiating displaying of an image. The display ending instruction command is to instruct to terminate the displaying of an image. The display setting saving command is to save display setting at the time onto the ultra -small and wide -angle camera device 1.

The image pattern switching command shown in Fig.8 is to instruct the switching of the three screens of a wide-angle screen in Fig.9 (A), a clipping screen in Fig.9(B) and the double images screen in Fig.9 (C.) The PC display controlling unit 47 instructs switching to forward feeding that three screens are in a predetermined order or switching to backward feeding that three screens are in the reversed order, with two kinds of image pattern switching commands.

The clipping ring positioning command is to instruct the shifting of the clipped image. The PC display controlling unit 47 instructs to switch the region of an image clipped from the wide-angle screen to the upper/lower/left/right direction (the central direction, circumferential direction, clock wise direction and anti-clockwise direction viewed from a wide angle screen) based on four types of ring positioning commands.

The clipping ring size adjusting command is to instruct to enlarge or reduce the size of the clipped image. The PC display controlling unit 47 instructs to reduce the size of the image clipped from the wide-angle screen, to increase (zoom in) the magnification described later, to enlarge the size of the image clipped from the wide-angle screen, and to reduce the magnification (zooming out) described later, in accordance with the two kinds of clipping ring size adjustment commands.

The PC display controller 47 supplies the produced display instruction command to the host communication unit 46. The host communication unit 46 stores the supplied display instruction command to the communication buffer of the class processing unit 50. The class processing unit 50 of the host communication unit 46 sends the display instruction command saved in the communication buffer to the class processing unit 38 of the device communication unit 37 through the USB connector 44 of the personal computer 12, the USB cable 11 and the USB connector 7 of the ultra-small and wide -angel camera device 1. The display instruction command is saved in the communication buffer of the device communication unit 37 in the ultra-small and wide -angel camera device 1 (step ST12.)

The device communication unit 37 in the ultra- small and wide -angel camera device 1 supplies the display instruction command received by the communication buffer to the process controller 34 of the ASIC 24. The ultra-small and wide -angel camera device 1 starts producing process a display still image data based on the instruction from the process controller 34 (step ST 13.)

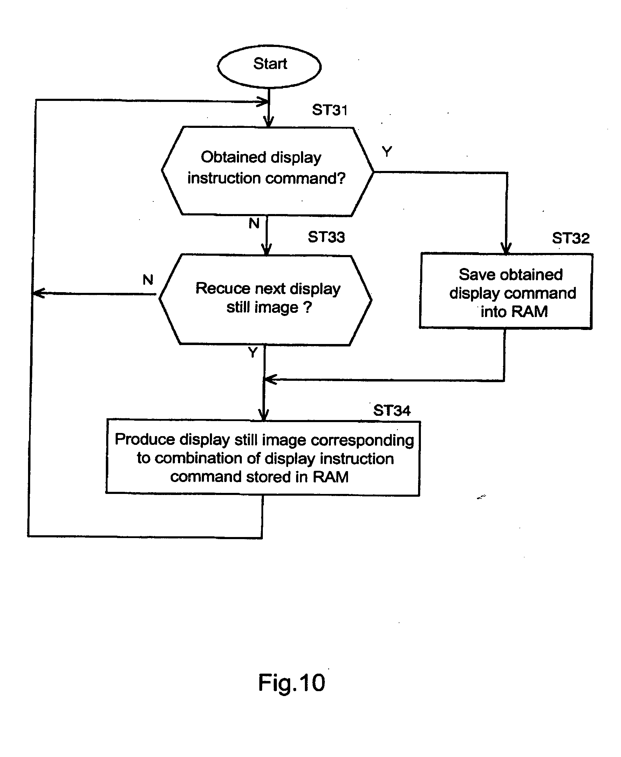

Fig.10 is a flow chart showing the operation of producing a display still image data by the ultra-small and wide -angle camera device 1. First, the process controller 34 of the ASIC 24 in the ultra-small and wide -angle camera device 1 determines whether it receives the display instruction command or not (step ST 31.) Second, the process controller 34 saves the received display instruction command to the RAM of the ASIC 24 and HDD26 after receiving the display instruction command ( step ST 32.)

If it does not receive the display instruction command, the process controller 34 determines whether next display still image data is produced or not (step ST33.) The process controller 34 determines the necessity of producing the next display still image data, for example, if the accumulated video data 53 is renewed or a display update period is measured by a timer. The process controller 34 determines that producing the next display still image data is not necessary except the above. In case of producing the next display still image data is not necessary, the process controller 34 returns the step ST 31 and determines whether the display instruction command is obtained or not. The accumulated video data 53 is updated by adding the data every time when the JPEG engine 35 compresses the shot still image data 52. The process controller 34 may determine whether the shot still image data 52 is updated or not, instead of determining whether the accumulated video data 53 is updated or not.

Accordingly, the process controller 34 obtains the display instruction command, and waits updating the accumulated video data 53 and the elapse of display updating frequency (step ST 31 to ST 33.) Under such circumstance, as shown in Fig.7, if the device communication unit 37 in the ultra- small and wide -angel camera device 1 receives the display instruction command, the process controller 34 saves the received display instruction command to the RAM 64 and the like.

The process controller 34 instructs to produce the display still image data in response to the combination of display instruction commands saved in the RAM after it saved the received display instruction command to the RAM (step ST 34.)

For example, if the process controller 34 determines that the display of a real time wide-angle image is instructed in response to the combination of display instruction commands saved in the RAM, it instructs the display image production unit 32 to produce wide-angle still image data based on the shot still image data 52 saved in the HDD 26.

The display image production unit 32 obtains the shot still image data 52 saved in the HDD 26 and reduces it to a predetermined aspect ratio and resolution so as to produce still image data of a rectangular wide-angle screen. Here, reduction processing may be performed by thinning pixel data for example. The display image production unit 32 produces still image data of a predetermined size and rectangular wide-angle screen, displayed by the large size LCD 43 of the personal computer 12, of which data amount becomes small.

As other function more than the above, if the process controller 34 determines that the display of a real time clipped screen image is instructed in response to the combination of display instruction commands saved in the RAM, it instructs the display image production unit 32 to produce still image data of clipped screen based on the shot still image data 52 saved in the HDD 26.

The display image production unit 32 obtains the shot still image data 52 saved in the HDD 26, clips the range corresponding to the position and its size of the clipped ring from the shot still image data 52, and then, performs process of correcting the outline of the image so as to be a rectangular image including a predetermined aspect ratio and resolution regarding the outline of clipped image and corrects deformation (such as correction process for distortion abrasion) by using a parameter regarding image distortion of the fish lens 9. Finally, it produces display still image data for clipped image screen. The display image production unit 32 magnifies the clipped image with the magnification that fits to the size of a predetermined area which will be displayed by the large size LCD 43 of the personal computer 12 and produces the display still image data of the magnified and clipped image. Here, the parameter regarding image distortion of the fish lens 9 may be saved by the memory in the DSP 25 in advance.

As other function more than the above, if the process controller 34 determines that the display of a past time wide-angle image is instructed in response to the combination of display instruction commands saved in the RAM 64, it instructs the JPEG engine 35 to expand the past time compressed still image instructed by the display instruction commands regarding the accumulated video data 53 saved in HDD26 and the display image production unit 32 to produce still image data for a wide-angle screen based on the shot still image data produced by the expansion of the still image data with the JPEG engine 35.

The JPEG engine 35 reads the compressed still image data at the time designated by the accumulation video data 53 saved in the HDD 26 and expands it if it receives the instruction of expanding the compressed still image data. The JPEG engine 35 analyzes the read compressed still image data and executes run length decoding and inverse DCT conversion every block unit to them to produce the expanded wide- angle still image data.

The display image production unit 32 obtains the still image of the wide -angle screen (a circular image) expanded with the JPEG engine 35, clips a predetermined portion of the data as it is necessary, reduces the size to have a predetermined aspect ratio and resolution so as to produce the display still image data of the rectangular wide -angle screen. The display image production unit 32 produces display still image data of a predetermined size and rectangular wide-angle screen, displayed by the large size LCD 43 of the personal computer 12. Here, the display image production unit 32 reads the expanded still image data, which the JPEG engine saved into the HDD26 for example. This reading enables the unit 32 to obtain the still image data of the wide- angle screen expanded by the JPEG engine 35

Accordingly, the display image production unit 32 produces the display still image data in response to a combination of display instruction commands stored in the RAM. If a combination of the display instruction commands stored in the RAM is updated by receiving a new display instruction command, the display image production unit 32 produces the display still image data in response to such update combination. The ultra -small and wide -angle camera 1 completes producing the still image data on step ST13 in Fig.7.

When the display image production unit 32 produces the display still image data, the device communication unit 37 of the ultra- small and wide -angle camera 1 sends the display still image data produced by the display image production unit 32 to the host communication unit 46 of the personal computer 12 as shown in Fig.7 (step ST14.)

More specifically, the display still image data is sent to the host communication unit 46 through the communication buffer of the device communication unit 37, the USB connector 7 of the ultra -small and wide -angle camera device 1, the USB cable 11, the USB connector 44 of the personal computer 12 and the communication buffer of the host communication unit 46.

The host communication unit 46 supplies the received display still image data to the PC saving process unit 48. If the PC saving process unit 48 receives the communication data such as still image data from the host communication unit 46, it saves the received communication data to the HDD 45 of the personal computer 12. Namely, the display still image data is saved as the received data 51 in the HDD 45 of the personal computer 12.

The PC saving process unit 48 informs the PC display control unit 47 of the saving of the display still image data to the HDD 45. The PC display control unit 47 reads the display still image data from the HDD 45 of the personal computer 12 and supplies it to the large size LCD 43 as display data.

Accordingly, this data supplying enables the large size LCD 43 of the personal computer 12 to display the image in response to the display instruction command produced by the PC display control unit 47 (step ST15.)

For example, if the PC display control unit 47 produces an image pattern switching command that instructs displaying an wide angle screen (a circular image), the large size LCD 43 of the personal computer 12 displays the wide angle screen shown in Fig.9 (A.) In the wide angle screen, the circumferential area which is outside of the circular image is displayed as a uniform black color.

Further, in case of that the PC display control unit 47 produces an image pattern switching command indicating the display of a clipped screen, the LCD 43 of the personal computer 12 displays the clipped screen shown in Fig.9(B). The clipped screen is produced by clipping a part of the circular image (the image of the shot still image data 52 and the like) and the clipped part is performed expansion process.

Further, in case of that the PC display control unit 47 produces an image pattern switching command indicating the display of a double images screen, LCD 43 of the personal computer 12 displays the double images screen shown in Fig.9(C). The double images screen comprises the circular image having less reduced data amount (the shot still image data 52 and the like) and the clipped expanded image formed by clipping a part of the circular image and expanding it.

As other function more than the above, if the PC display control unit 47 produces an clipped ring position arrangement command which moves the clipped position, the large size LCD 43 of the personal computer 12 displays the clipped screen of which an image center is slightly moved to upper or lower or right or left direction compared to the screen in Fig.9 (B.) This clipped screen is also expanded.

Further, if the PC display control unit 47 produces a clipped ring size arrangement command which expands and reduces the clipped screen, the large size LCD 43 of the personal computer 12 displays the clipped screen in which the clipped region of the image is large or small compared to the screen in Fig.9 (B.)

Accordingly, the large size LCD 43 of the personal computer 12 displays an image based on the display still image data. On the other hand, the ultra-high and wide- angle camera device 1 repeats the processes execution of producing the display still image data shown in Fig. 10.

Then, as shown in Fig.7, when the accumulated video data 53 saved in the HDD 26 of the ultra-high and wide- angle camera device 1 is updated and a display renewal period is elapsed (step ST16), the process controller 34 instructs to produce a next display still image based on a combination of the display instruction commands saved in the RAM 64 (step ST17.) The JPEG engine 35 and the display image production unit 32 produce the next display still image data in response to the instruction of producing a next display still image from the process controller 34. The device communication unit 37 sends the produced display still image data to the host communication unit 46 of the personal computer 12 (step ST18.) The PC saving process unit 48 saves the received display still image data into the HDD 45. The PC display control unit 47 reads the display still image data from the HDD 45 of the personal computer 12 and supplies it to the large size LCD 43 as display data. Accordingly, the large size LCD 43 of the personal computer 12 displays an image based on the next display still image data (step ST19.)

This second display still image data is based on a combination of display instruction commands saved in the RAM54 of the ultra-high and wide- angle camera device 1 and also based on the display instruction commands which are the same of the initial display still image data. Hence, if there is a change of sceneries viewed by the fish lens 9 between these two display still image data (the display image based on the initial display image data and the second display image based on the still image data) such as a person's moving, the large size LCD 43 of the personal computer 12 reveals such change as a screen change.

After the above processes, the process controller 34 of the ultra-high and wide-angle camera device 1 repeats the executions of producing the next still image data and sending it (steps, ST 21 and ST 22) every time when the accumulated video data 53 saved in the HDD 26 is updated or the display update period is elapsed as shown in Fig.9 (step ST20.) The large size LCD 43 of the personal computer 12 displays the newly received still image (step ST 23.)

Accordingly the LCD 43 of the personal computer 12 displays a video based on a plurality of still images continuously shot by the ultra-high and wide- angle camera device 1 (step ST 15,ST 19, ST 23.)

On the other hand, the PC display control unit 47 of the personal computer 12 produces a newly display instruction command based on new input data if it receives a new input data from the input device 42 and send it to the ultra-high and wide- angle camera device 1. This another command transmission is performed regardless of the above process in that the ultra-high and wide-angle camera device 1 sends the plurality of the display still image data continuously shot based on the predetermined display instruction command to the personal computer 12 during this another command transmission .

Then, a combination of display instruction commands saved in the RAM 64 of the ultra-high and wide- angle camera device 1 is updated. For example, the combination of display instruction commands saved in the RAM is updated from instructions for displaying a wide angle screen to instructions for displaying a clipped screen. If a combination of display instruction commands saved in the RAM of the ultra-high and wide- angle camera device 1 is updated, the process controller 34 changes an instruction thereafter depending on the updating. Accordingly, the video displayed by the large size LCD 43 of the personal computer 12 is switched from the video in the wide angle screen in Fig.9(A) to the video in the clipped image screen in Fig.9(B) for example thereby.

Here, the operation of the monitor system 13 described above is a case when the large size LCD 43 of the personal computer 12 displays the video taken by the ultra -small and wide -angle camera device 1 or a related video based on it. As other function more than the above, the monitor system 13 of the embodiment enables the LCD 5 of the ultra -small and wide -angle camera device 1 to display a wide angle video taken by the ultra -small and wide -angle camera device 1 or a clipped image based on it. In such case, the input device 22 of the ultra -small and wide -angle camera device 1 may produce a display instruction command, the display image production unit 32 may produce the display still image data for the LCD 5 of the ultra -small and wide -angle camera device 1 and the LCD 5 of the ultra -small and wide -angle camera device 1 may display an image based on the display still image data produced by the display image production unit 32.

Further, it was explained in the above that the operation of the monitor system 13 is the process for a video and the process for displaying the image based on the video by the LCD43. The ultra -small and wide -angle camera device 1 also includes the microphone 27. The microphone 27 generates a sound signal such as a voice. The A/D converter 28 samples the sound signal and saves the sound signal into the camera file saving unit 33 in the ASIC 24. The camera file saving unit 33 saves the supplied sound data to the HDD 26 in the ultra -small and wide -angle camera device 1. Accordingly, the accumulated sound data 54 is saved in the HDD 26 of the ultra- small and wide -angle camera device 1. The ultra-small and wide-angle camera device 1 may send the accumulated sound data 54 with the display still image data produced by the display image production unit 32 to the personal computer 12 and the personal computer 12 may output the sound such as a voice based on the accumulated sound data 54 from a speaker not shown in the figure. Accordingly, the personal computer 12 can reproduce a video and sounds, monitored by ultra-small and wide -angle camera 1.

As stated above, in the monitoring system 13 regarding the embodiment, the ultra- small and wide -angle camera device 1 is coupled to the personal computer through the USB cable 11. Further, the CMOS imaging device 21 in the ultra- small and wide -angle camera device 1 generates brightness distribution data including a circular image. The color conversion processing unit 31 produces the shot still image data 52 having a rectangular shape and including a circular image. The JPEG engine 35 compresses the reduced size still image data 52 with the JPEG method. The HDD 26 saves the accumulated video data 53 comprising a plurality of the compressed still image data. The JPEG engine 35 expands the still image data saved in the HDD 26. The display image production unit 32 produces display image data that are displayed by the LCD 43 of the personal computer 12 and the LCD 5 from the original -size reproduced still image data 56.

Accordingly, in the monitor system 13 of the embodiment, the reduced size still image data 52 shot by the ultra- small and wide -angle camera device 1 is compressed by the JPEG method and expanded later to clip desired region of the image, and displayed by the LCD 43 and /or its clipped image is displayed by the LCD 5 of the ultra- small and wide -angle camera device 1.

Further, the color conversion processing unit 31 produces the shot still image data 52, based on the displaced region data 69. In the still image data, a rectangular image including the circular image shot by the fish lens 9 is formed and a plurality of pixel data at the circumferential area outside of a predetermined circle region is replaced with a uniform color (such as black). The JPEG engine 35 compresses the shot still image data 52 by the JPEG method.

Accordingly, in blocks only composed of a single color pixel data in the circumferential area, only a constant component is formed, but the oscillatory component is not formed by block encoding in the JPEG method. Further, in the circumferential area, pixel data having a single color are continued, reducing the encoded data amount of the oscillatory component with the run length encoding.

As the result of it, the compressing method according to the monitor system 13 of the embodiment can remarkably reduce the data amount of the shot still image after compression compared to the case when the shot still image data is directly compressed by the JPEG method without being converted into a monochrome color in the circumferential area.

Further, pixel data within the predetermined circular region of the rectangular shot image is not replaced. The circular image is still a shot image.
Accordingly, the image quality of the circular image after compressing can be hold as being equal to the image quality in the case where the circumferential area is not replaced with a monochrome color ,but compressed by the JPEG method. Namely, this method does not deteriorate the image quality of the circular image, effectively reducing data amount of the image shot by using the fish lens 9.

Further, the JPEG engine 35 of the embodiment expands the compressed still image data, which are effectively compressed. The display image production unit 32 corrects image deformation after expansion by using a parameter regarding the image distortion due to the fish lens 9 and produces the displayed image by clipping a part of the image after expansion. Accordingly, in the embodiment, the data amount of the image shot by using the fish lens 9 are effectively reduced and saved in the HDD 26. Such image data are expanded and the deformation of a part of them is optimally corrected based on a parameter corresponding to the used wide angle lens. Hence, the image can be displayed with a favorite image quality which is equal to a case when an image is shot by a standard lens.

Here, in the embodiment, the JPEG engine 35 compresses all the plurality of the shot still image data 52 which are updated every time when it is continuously shot by the CMOS imaging device 21 by the JPEG method and these data are saved as the accumulated video data 53. Alternatively, for example, the JPEG engine 35 may compress a part of the plurality of the shot still image data 52, which are updated when it is continuously shot by the CMOS imaging device 21, every other data by the JPEG method and may save it, further reducing the data amount accumulated as the accumulated video data 53. If the shot still image data 52 is compressed every other data by the JPEG method and saved, the frame rate of the accumulated video data 53 becomes a half of that of the image shot by the CMOS imaging device 21.

In the embodiment, the CMOS imaging device 21 includes three million pixels. Accordingly, the compressed still image data are expanded by the JPEG engine 35 and the part of the compressed image can be clipped as a size of VGA or more by the display image production unit 32. Accordingly, a display image having more practical and high resolution can be obtained as a VGA size or more by clipping a desired region from the still image data saved in the HDD 52 and expanding the clipped region while the memory region for saving the accumulated video data 53 in the HDD 52 can be effectively reduced.

Embodiments stated above of the invention are preferable examples of the invention, but the invention is not limited to them and may include various modifications and changes within the spirit of the invention.

The color conversion processing unit 31 in the above embodiment forms a rectangular image including the circular image shot by the fish lens 9 and a plurality of pixel data at the circumferential area outside of a predetermined circle region is replaced with a uniform color (such as black). Alternatively, the color conversion processing unit 31 may replace the plurality of pixel data at the circumferential area with the plurality of colors of which numbers are approximately the same of the pixel numbers. Otherwise, the unit 31 may replace it with the plurality of colors of which numbers are reduced compared to that of the original image in the circumferential area. Accordingly, pluralities of pixel data in the circumferential area approximately become a uniform color or its color numbers are reduced. Even in such modification, high frequency components are reduced when the image data is compressed with the JPEG method and its run length is expanded. The data amount after compression can be reduced compared to a case when the image data are compressed by the JPEG method without the data amount in the circumferential area being replaced with an approximately uniform color.

Here, the predetermined circular region is preferably a part of the intrinsic subject without leak light and diffraction light, but may be a circular region which has a slightly larger diameter including the slight circumferential area in addition to the part of the intrinsic subject. The predetermined circular region may be an eclipse region if the shot image becomes an eclipse.

In the above embodiment, the color conversion processing unit 31 replace a plurality of image pixel data in the circumferential area with a uniform color (such as black.) Alternatively, a plurality of pixel data in the circumferential area may be replaced with a single black (such as black) by the JPEG engine 35 or the pre-processing unit.

In the above embodiment, the ultra- small and wide -angle camera device 1 comprises the HDD 26 that saves the still image data (the accumulated video data 53) compressed by the JPEG method, the JPEG engine 35 that expands the compressed expanded still image data and the display image production unit 32 that produces the display still image data from the expanded still image data. Alternatively, all of these constituents or a part of them may be installed in the personal computer 12.

If all of these constituents are installed in the personal computer 12 for example, the device communication unit 37 in the ultra-small and wide -angle camera device 1 may send the still image data compressed by the JPEG engine 35 to the host communication unit 46 in the personal computer 12 thorough the USB cable 11. In such case, data amount of the image to be sent can be reduced compared to the case when the device communication unit 38 in the ultra-small and wide -angle camera device 1 sends the shot still image data 52 itself which is not compressed by the JPEG engine 35 to the host communication unit 46 in the personal computer 12.

In the above embodiments, the fish lens 9 is used as one of wide angle lenses, but the lens is not limited to the wide angle lens. If a lens extends a region of an subject shot by the CMOS imaging device 21, which is wider than the region of subject to be displayed, such lens can be applied to as an constituent of an embodiment of the invention. In using the constitution disclosed in these embodiments, it can be expected that the reduction effect of the data amount to save and/or to transmit, with a regardless of what kind of lens are used.

In the above embodiments, the ultra-small and wide -angle camera device 1 and the personal computer 12 send and receive communication data each other through the device communication unit 37 as a transmission unit, the USB cable 11 and the host communication unit 46. Alternately, the ultra-small and wide -angle camera device 1 and the personal computer 12 may be coupled together through a communication cable based on the Institute of Electrical and Electronic Engineers (IEEE) 802.2 standard or a wireless communication such as IEEE802.11 standard. Further, the ultra-small and wide -angle camera device 1 and the personal computer 12 may be coupled together through a network such as Local Area Network (LAN) and Internet and send and receive predetermined communication data each other through a communication repeater such as a hub device and a router device on the net work.

In the above embodiments, the single ultra- small and wide -angle camera device 1 and the single personal computer 12 are coupled together through the USB cable 11. Alternatively, the single ultra- small and wide -angle camera device 1 and a plurality of personal computers 12 may be coupled together through a net work, or a plurality of ultra- small and wide -angle camera device devices 1 and the single personal computers 12 may be coupled together, or a plurality of ultra- small and wide -angle camera device devices 1 and a plurality of personal computers 12 may be coupled together. In these modifications, each of the personal computers 12 specifies one of the ultra- small and wide -angle camera device devices 1 as a monitoring device by using identification information on the net work such as an IP address and may send a display instruction command to it. Further, each of the ultra- small and wide -angle camera device devices 1 may send the displayed image data added with identification information for one of the personal computers 12 as a receiver.

In the above embodiments, the display image production unit 32 corrects an outline of a predetermined image and executes correction of deformation (such as correction of distortion) by using a parameter regarding to the image distortion of the fish lens 9. Here, the parameter regarding image distortion of the fish lens 9 may saved by the memory in the DSP 25 in advance. Alternatively, the display image production unit 32 may corrects deformations which are different among kinds of lens by using a parameter regarding distortion of an image due to a wide lenses such as the fish lens 9 , which is added to the compressed still image data. Here, the JPEG engine 35 can add such parameter to the compressed still image data for example. This addition of a parameter enables the display image production unit 32 to produce a favorite display image in which image distortion due to a kind of used lens can be optimally removed regardless of kinds of wide lenses.

More specifically, if the display image production unit 32 is realized in the side of the personal computer 12, and a plurality of the ultra- small and wide -angle camera device devices 1 including the fish lens 9 of which optical characteristics are different each other, are coupled to the personal computer 12 in a net work, the above parameter may favorably be added to the compressed still image data. Such addition of a parameter enables the display image production unit 32 to produce a favorite display image in which the image deformation can be optimally removed based on each of the still images compressed by the plurality of the ultra- small and wide -angle camera device devices 1. In a case when the plurality of the ultra- small and wide -angle camera device devices 1 are coupled each other within a net work and a camera can be switched among the devices 1, the display image production unit 32 can produce a display image, in which image deformation is optimally removed without receiving and effect of switching one of the ultra- small and wide -angle camera device devices 1.

Here, the data regarding the parameter added to the compressed still image data may be recorded to the camera unit 4 (it is also available to record the data into the EE PROM 65 and the like installed in a lens for optically reading) and the JPEG engine 35 may read this record and add it at the time of compressing. Alternatively, the display image production unit 32 includes a table data comprising a plurality of parameter in response to characteristics of the fish lens 9 in advance and the JPEG engine 35 may add information which designates one of parameters in the table. Alternatively, a standard member for measurement may be shot in advance, producing a parameter from the shot image by calculation so as to add the produced parameter to the compressed data. Here, the parameter may be produced from the shot image by calculation within the ultra-small and wide -angle camera device 1 or the personal computer 12. Further, the standard member for measurement may be, for example, a thing in which a memory of a grid sheet is added to the inside of a hemispherical object or a plurality of radially arranged lines from the center, or a plurality of coaxial circular lines. The distance between a plurality of radially arranged lines may be 15 degrees or 30 degrees for example. The distance between a plurality of coaxial circular lines may be 2 cm for example. Accordingly, imaging the inside of the hemispherical object in which predetermined lines are drafted, generates distortion in response to the image height of the fish eye lens 9 in the shot image.

Further, the monitor system in the invention may comprise the following configuration. Namely, the rectangular image including the circular image shot by the fish lens 9 of the ultra-small and wide -angle camera device 1 is compressed as a compressed still image data after the pixel data of the image is replaced so as to reduce a plurality of color numbers of the pixel data outside of the predetermined circular region. Then, the compressed still image data and a parameter regarding image distortion due to the fish lens are saved in the memory device of a server coupled to a net work or HDD 26 of the ultra-small and wide -angle camera device 1. At this time, the parameter may be added as a header data to the JPEG data, which is the compressed still image data. Further, the server and/or the ultra-small and wide -angle camera device 1 sends the saved compressed still image data and the parameter to the personal computer 12 coupled to them through a network. The display image producing unit installed in the personal computer 12 expands the image of the received compressed still image data, corrects it using the received parameter and clips a part of the image after correction so as to produce a display image.
The LCD 43 of the personal computer 12 displays the displayed image.

Alternatively, the monitor system in the invention may comprise the following configuration. Namely, the rectangular image including the circular image shot by the fish lens 9 of the ultra-small and wide -angle camera device 1 is compressed as a compressed still image data after the pixel data of the image is replaced so as to reduce a plurality of color numbers of the pixel data outside of the predetermined circular region. Then, the compressed still image data and a parameter regarding image distortion due to the fish lens 9 are saved in the memory device of a server coupled to a net work or the HDD 26 of the ultra-small and wide -angle camera device 1. At this time, the parameter may be added as a header data to the JPEG data, which is the compressed still image data. Further, the server and/or the ultra-small and wide -angle camera device 1 expands the image of the saved compressed still image data and produces partial image data formed by clipping a part of the image. Further, the server and/or the ultra-small and wide -angle camera device 1 sends the partial image data and the parameter to the personal computer 12 coupled to them through a network. The display image producing unit installed in the personal computer 12 corrects the deformed image of the received partial image by using the received parameter and produces a display image. The LCD 43 of the personal computer 12 displays the displayed image.

In the monitor system regarding the modifications, the rectangular image including the circular image shot by the fish lens 9 can be effectively compressed and saved. Further, after shooting an image, the monitor system optimally corrects image deformation using a parameter regarding distortion of the fish lens 9 and displays the clipped image as a part of the image after correcting deformation.

Further, in the monitor system in these modifications, the image including the circular image shot by the ultra-small and wide-angle camera device 1 can be widely utilized so as to be browsed in a personal computer coupled to a network. The personal computer executes a browsing software program specified for browsing the image, receiving the image from a network, visually correcting the received image and displaying it for browsing.

Further, everyone can freely browse the partial image which is clipped from the circular image shot by the ultra-small and wide -angle camera device 1 while specific browsing software executed by the personal computer is freely provided. This browsing can be performed by saving the image including the circular image shot by the ultra-small and wide -angle camera device 1 as a free sample into a server device which can be accessible via net work and holding the image which can be downloaded. For example, if a person considers to buy the ultra-small and wide -angle camera device 1, he/she makes his /her computer to execute the browsing software program to be freely distributed before buying and browses a sample on a net work, confirming that the clipped image has a sufficiently high quality. Namely, it is expected to promote selling the ultra-small and wide -angle camera device 1.

### [Industrial Applicability]

The present invention can be widely applied to a security system in a home, building or the like, various kinds of monitoring system, a remote monitoring system for a pet such as a dog or a sightseeing area, a TV telephone system, a TV conference system, a system to couple a space separated from other space with other space, a personal radio broadcasting system, and a recording system for human's or automobile's behavior, or the like.

## Claims

1. A method of compressing image data shot by a wide -angle lens comprising:
step of displacing the image data in a way so that within a rectangular image containing a circular image shot by the wide-angle lens, numbers of colors associated with a plurality of pixel data outside of a predetermined circular region are reduced; and
step of compressing the image data associated with the rectangular image after the step of displacing is performed on the rectangular image.

2. A method of expanding and displaying the image data shot by the wide -angle lens comprising:
step of expanding the image data, wherein the image data is displaced in a way so that within a rectangular image containing a circular image shot by the wide-angle lens, numbers of colors associated with a plurality of pixel data outside of a predetermined circular region are reduced; and
step of correcting deformation of the expanded image by using a parameter related to image distortion of the wide-angle lens, and producing a display image which is a part of the expanded image that has been clipped.

3. A method of compressing image data shot (imaged) by the wide -angle lens comprising:
step of displacing the image data in a way so that within a rectangular image containing a circular image shot by the wide-angle lens, numbers of colors associated with a plurality of pixel data outside of a predetermined circular region are reduced; and
step of encoding the displaced image data separately into a constant component and an oscillatory component by block encoding and/or encoding the displaced image data by run length encoding based on a pixel alignment.

4. essing image data shot by the wide -angle lens comprising:
step of displacing the image data in a way so that within a rectangular image containing a circular image shot by the wide-angle lens, numbers of colors associated with a plurality of pixel data outside of a predetermined circular region are reduced; and
step of encoding the displaced image data separately into a constant component and an oscillatory component by block encoding, wherein at each encoding of the frequency component, at least one of the frequency component of the displaced image data is encoded by run length encoding based on pixel alignment.

5. A compressing device that compresses image data shot by a wide -angle lens comprising:
displacement means that displaces the image data in a way so that within a rectangular image containing a circular image shot by the wide-angle lens, number of colors associated with a plurality of pixel data outside of a predetermined circular region is reduced; and
encoding means that encodes the displaced image separately into a constant (DC) component and an oscillatory (AC) component by block encoding or encodes the displaced image by run length encoding based on a pixel alignment.

6. A wide angle camera device comprising:
a wide -angle lens;
an imaging means that generates an rectangular image including the circular image formed by light concentrated in the wide -angle lens and;
an image production means that displaces the color of an image in a way as to reduce the number of colors in the rectangular image outside of a predetermined circular region, and produces an image whose color within the predetermined circular region is converted; and
a compression means that separates the shot image into constant component and an oscillatory component by block encoding or encodes the shot image by run length encoding based on a pixel alignment.

7. The wide-angle camera device in claim 6 wherein the imaging means has at least three million pixels,
the wide-angle camera device further comprising:
a saving means that saves the image data compressed by the compressed means;
an expanding means that expands the compressed image saved by the saving means; and
a display image production means that clips a part of the image expanded by the expanding means and produces a clipped image that displays the clipped part in an enlarged form of at least the VGA size..

8. A monitor system comprising a wide-angle camera device and a browsing device, wherein
the wide-angle camera device comprises:
an imaging means with a resolution of at least 3 million pixels that forms a circular image based on light concentrated by the wide-angle lens and generates a rectangular image including the circular image;
a shot image production means that displaces the color of an image in a way as to reduce the number of colors in the rectangular image outside of a predetermined circular region, and produces an image whose color within the predetermined circular region is converted;
a compression means that separates the shot image into constant component and an oscillatory component by block encoding or encodes the shot image by run length encoding based on a pixel alignment; a saving means that saves the image data compressed by the compressed means;
an expanding means that expands the compressed image saved by the saving means; and
a display image production means that clips a part of the image expanded by the expanding means and generates a clipped image that displays the clipping part in an enlarged form of at least the VGA size ;and
the browsing device comprises:
a displaying means that receives either the enlarged clipped image or the clipped image before it is enlarged by transmission from the wide-angle camera device and displays the received image as a displayed image.

9. comprising:
a wide-angle camera device that includes a wide-angle lens and produces a rectangular image containing a circular image shot by the wide-angle lens;
a browsing means that comprises a display means displaying the rectangular image or a part thereof, the rectangular image being produced by the wide angle lens camera device;
a displacement means that displaces the pixel data in a way so that within a rectangular image containing a circular image shot by the wide-angle lens, number of colors associated with a plurality of pixel data outside of a predetermined circular region is reduced; and
a compression means that separates the pixel data that has been displaced by the displacement means into constant component and an oscillatory component by block encoding or encodes the image data by run length encoding based on a pixel alignment;
a transmission means that transmits the image compressed by the compressing means from the wide angle lens camera device to the browsing means and/or a saving means that savings the image compressed by the compressing means;
an expanding means that expands the compressed image saved by the saving means or the compressed image transmitted by the transmitting means; and
a display image production means that enlarge or reduce the image expanded by the expanding means and/or clips a part of the expanded image so as to produce the display image for displaying by the display means .

10. The monitor system of claim 9, wherein
the compressing means adds the image data produced as the result of compression with a parameter related to the distortion of the image formed by the wide-angle lens, and wherein the display image production means corrects the distortion of the image expanded by the expanding means using the parameter added to the compressed image data.

11. A monitor system comprising:
a saving means that saves the image data which is compressed after being displaced in a way so that within a rectangular image containing a circular image shot by the wide-angle lens, numbers of colors associated with a plurality of pixel data outside of a predetermined circular region are reduced, and also saves the parameter related to the distortion of the image formed by the wide-angle lens;
a transmission means that transmits the image data saved by the saving means and the parameter;
an expanding means that expands the compressed image transmitted by the transmission means;
a display image production means that produces a display image by clipping a part of the image corrected using the parameter transmitted by the transmission means for the distortion of the image expanded by the expanding means; and
a display means that displays the display image produced by the display image production means.

12. A monitor system comprising:
a saving means that saves the image data which is compressed after being displaced in such a way so that within a rectangular image containing a circular image shot by the wide-angle lens, numbers of colors associated with a plurality of pixel data outside of a predetermined circular region are reduced, and also saves the parameter related to the distortion of the image formed by the wide-angle lens;
an expanding means that expands the image associated with the image data saved by the saving means ;
a transmission means that transmits data of a partial image clipped as a part of the image generated by the expanding means, and the parameter;
a display image production means that corrects the distortion of the partial image data transmitted by the transmission means using the parameter and produces a display image; and
a display means that displays the display image generated by the display image production means.
